# FASCICULE DE BREVET EUROPEEN

(11) **EP 3 112 183 B1**
(45) Date de publication et mention de la délivrance du brevet: **14.03.2018**
(21) Numéro de dépôt: 16001410.6
(22) Date de dépôt: 23.06.2016
(51) Int. Cl.: B60B 1/04, B60B 27/02, B60B 1/02

(54) **MOYEU POUR ROUE DE CYCLE, ROUE ET CYCLE ÉQUIPÉS D'UN TEL MOYEU**
NABE FÜR RAD EINES FAHRRADS, RAD UND FAHRRAD, DIE MIT EINER SOLCHEN NABE AUSGESTATTET SIND
HUB FOR CYCLE WHEEL, WHEEL AND CYCLE PROVIDED WITH SUCH A HUB

(30) Priorité: 02.07.2015 FR 1501407
(43) Date de publication de la demande: 04.01.2017
(73) Titulaire: MAVIC S.A.S., 74370 Metz-Tessy (FR)
(72) Inventeur: Mouzin, Olivier, 74210 Montmin (FR); Fantin, Jérôme, 74600 Seynod (FR)
(74) Mandataire: Rambaud, Pascal

(56) Documents cités:
- EP-A1- 1 939 013
- FR-A1- 2 640 203
- US-A1- 2007 284 934
- US-A1- 2008 116 738

## Description

### DOMAINE DE L'INVENTION

L'invention concerne un moyeu d'une roue de cycle, tel qu'une bicyclette. Elle concerne également une roue de cycle, un cycle équipé d'un tel moyeu et un procédé de montage d'une telle roue.

### ETAT DE LA TECHNIQUE

Une roue comprend traditionnellement une jante, un moyeu et des rayons assurant la liaison mécanique entre la jante et le moyeu.

Le moyeu comprend généralement un corps configuré pour tourner autour d'un axe et conformé pour recevoir au moins deux nappes de rayons disposées de part et d'autre d'un plan médian du moyeu.

Les roues à rayons tendues comportent généralement à l'une de leurs extrémités une tête qui est retenue unilatéralement dans une butée du moyeu et à l'autre extrémité une fixation à la jante permettant une mise en tension du rayon, le rayon s'étendant selon une direction tangentielle à l'axe de rotation du moyeu. Le document EP 896886 décrit une solution de ce type.

On parle de roue à montage tangentiel.

Un avantage, qui résulte de ce montage connu, est qu'il est possible d'utiliser un rayon droit avec une tête coaxiale. Cela permet une transmission des efforts selon la direction longitudinale du rayon.

Un inconvénient a toutefois été observé sur certaines roues à montage tangentiel. Il arrive que, lors d'une sollicitation exceptionnelle conduisant par exemple à une totale détente du rayon, la tête du rayon soit momentanément écartée de la butée. Une conséquence peut être la séparation du rayon et du moyeu. En d'autres termes il peut arriver qu'une tête se décroche du moyeu. Une telle situation survient par exemple en heurtant une pierre ou une bordure, en roulant dans un trou, ou autre. Une déformation de la jante induit alors une baisse de la tension du rayon, et parfois une baisse suffisante pour permettre un décrochage de la tête.

Bien qu'exceptionnelle ce type de situation doit être prise en compte, notamment pour des applications où la roue est au contact d'un relief non prévisible et possiblement accidenté comme en vélo tout terrain par exemple.

Pour tenter de limiter cet inconvénient, une solution a été proposée dans le document EP2002992. Cette solution prévoit une mise en place du rayon selon une direction radiale avant de le basculer dans une direction tangentielle.

Pour cela cette solution prévoit un moyeu qui définit une première rainure, pour l'accueil d'une portion du rayon, dans un plan perpendiculaire à l'axe de la roue et selon une direction tangentielle par rapport au moyeu, le moyeu définissant encore une butée selon la direction tangentielle pour l'appui de la tête. En outre le moyeu comprend un moyen de retenue de la tête selon une direction radiale, quand le rayon est orienté tangentiellement par rapport au moyeu.

Cette solution n'est cependant pas optimale, notamment en ce qui concerne le maintien en tension des rayons. Or, le réglage de la tension des rayons est une opération délicate qui nécessite un savoir-faire et un outillage spécifiques.

Le document FR 2640203 décrit une autre configuration dans laquelle le problème d'éjection des rayons est résolu car les logements du moyeu n'autorisent la mise en place du rayon que par enfilement dans le sens de sa longueur à travers le logement.

Cependant cette configuration n'est pas compatible avec les rayons présentant une tête à chacune de leurs extrémités. Cette solution n'est pas non plus compatible avec certains procédés d'assemblage dans lesquels les rayons sont amenés au poste de montage avec leur écrou.

Il existe donc un besoin consistant à limiter voire à supprimer certains au moins des inconvénients des solutions connues. Le but de l'invention est de répondre à ce besoin. US 2008/116738 A divulgue un moyeu pour roue de cycle selon le préambule de la revendication indépendante 1.

### RESUME DE L'INVENTION

Selon un mode de réalisation, l'invention porte sur un moyeu pour roue de cycle, le moyeu comprenant un corps de moyeu configuré pour tourner autour d'un axe XX et conformé pour recevoir au moins deux nappes de rayons disposées de part et d'autre d'un plan médian Y0Z du moyeu perpendiculaire à l'axe XX et destinées à assurer une liaison mécanique entre le moyeu et une jante de la roue. Le corps de moyeu comprend au moins un flasque comportant un premier et un deuxième ensemble de logements. Chaque logement de ce flasque :
- est conformé pour loger au moins une tête d'un rayon de l'une desdites nappes et pour maintenir ledit rayon selon une direction tangentielle audit axe XX ;
- définit un siège conformé pour retenir la tête dudit rayon selon une direction tangentielle audit axe XX ;
- comprend une ouverture communicante avec le siège et débouchant selon une direction axiale parallèle audit axe XX.

Les ouvertures du premier ensemble de logements sont tournées au regard du plan médian Y0Z et les ouvertures du deuxième ensemble de logements sont tournées dans une direction s'éloignant du plan médian Y0Z. Les sièges des logements du premier ensemble de logements sont axialement plus éloignés du plan médian Y0Z que les sièges des logements du second ensemble de logements. Par cette configuration spécifique des ouvertures axiales des logements et du positionnement axial de leur siège, on dispose d'un rayonnage qui empêche l'éjection des rayons. En effet, les rayons placés dans les logements du premier ensemble de logements, ne peuvent être éjectés que par l'ouverture tournée vers l'intérieur du moyeu. Or ces rayons, de par les positionnements respectifs des sièges des premier et deuxième ensembles, se trouvent bloqués par les rayons associés au deuxième ensemble de logements, qui, eux, ne peuvent être éjectés que par l'extérieur du moyeu.

Les rayons associés au premier ensemble de logements sont donc bloqués par les rayons associés au deuxième ensemble de logements et ne peuvent sortir involontairement par leurs ouvertures axiales.

Il en est de même pour les rayons associés au deuxième ensemble de logements qui sont donc bloqués par les rayons associés au premier ensemble de logements.

L'invention permet ainsi d'éviter que les têtes de rayons sortent de leurs logements.

Cette configuration de rayonnage anti-éjection sera d'autant plus efficace que le premier croisement entre un rayon du premier ensemble et un rayon du deuxième ensemble sera proche du siège du rayon sur le flasque.

Par ailleurs, par rapport à une solution comme celle décrite dans le document EP2002992, les logements des premier et deuxième ensembles sont plus éloignés du plan médian. Les rayons qu'ils accueillent participent ainsi de manière optimale à l'équilibre de la roue et à la reprise des efforts.

Dans le cadre du développement de la présente invention, il a été observé que les rayons fixés les plus à l'intérieur du moyeu décrit dans le document EP2002992 sont relativement proches du plan médian et que cela impacte l'équilibre de la roue et la reprise des efforts par ces rayons. En effet, avec la construction décrite dans EP2002992, une butée sépare nécessairement les rayons internes des rayons externes ; or ces derniers ne peuvent être décalés vers l'extérieur du fait de la présence de la cassette de pignons. Les rayons internes se retrouvent donc nécessairement plus rapprochés du plan médian.

En pratique il a été observé que l'invention permet de conserver dans le temps le réglage de tension des rayons. Par ailleurs, l'équilibrage de la roue est amélioré augmentant de ce fait la précision du pilotage.

Par ailleurs, l'invention permet d'utiliser des rayons présentant une tête à chacune de leurs extrémités. L'invention autorise également les procédés d'assemblage dans lesquelles les rayons sont amenés au poste de montage avec leur écrou.

Facultativement, le moyeu selon l'invention comporte au moins l'une quelconque des caractéristiques suivantes prises séparément ou en combinaison.
- Selon un mode de réalisation, chaque logement des premier et deuxième ensembles de logements est conformé de manière à permettre un positionnement du rayon sur son siège qu'il maintient uniquement en passant par ladite ouverture du logement.
- Selon un mode de réalisation, chaque logement des premier et deuxième ensembles de logements est conformé de manière à permettre un positionnement du rayon sur son siège qu'il maintient uniquement en effectuant une introduction de la tête du rayon à travers l'ouverture selon un mouvement comprenant au moins une translation axiale.
- Selon un mode de réalisation, chaque ouverture est accessible par un mouvement selon une direction axiale audit axe XX.
- Selon un mode de réalisation, les logements sont conformés de manière à ce que chaque rayon maintenu dans un logement du premier ensemble de logements croise au moins un rayon maintenu dans un logement du deuxième ensemble de logements.
- Selon un mode de réalisation, les sièges des logements du premier ensemble sont disposés dans un plan YZa perpendiculaire à l'axe XX et les sièges des logements du deuxième ensemble sont disposés dans un plan YZb perpendiculaire à l'axe XX, les plans YZa et YZb étant distants d'une distance Dp, mesurée selon l'axe XX et supérieure à 0,2 mm et de préférence Dp est supérieure à 0,9 mm. Selon un autre mode de réalisation, la distance Dp est nulle. Dans ce dernier mode de réalisation, la concordance de plans YZa et YZb font qu'il est nécessaire de déformer légèrement les rayons pour pouvoir les monter, ce qui n'est pas sans effet sur leur tenue en fatigue.
- Dans un mode de réalisation préféré, Dp est comprise entre 0 mm et 10 mm, de préférence entre 0,2 et 5 mm et de préférence entre 0,9 et 3,5 mm. Cela permet de rendre encore plus efficace la fonction anti-éjection du rayonnage.
- Selon un mode de réalisation, le flasque présente, selon une rotation autour de l'axe XX, une alternance de logements appartenant au premier et au deuxième ensembles de logements.
- Selon un mode de réalisation, deux logements consécutifs appartenant respectivement au premier et au deuxième ensemble de logements sont conformés de manière à ce que les rayons qu'ils maintiennent se croisent à une distance Dc de l'axe XX, la distance entre l'axe XX et les sièges de ces logements étant de Ds, les distances Dc et Ds étant mesurées selon une direction radiale à l'axe XX et le rapport Dc/Ds étant inférieur à 2.5. Selon un mode de réalisation, le rapport Dc/Ds est inférieur à 2, de préférence, le rapport Dc/Ds est inférieur à 1.5. Dans le mode de réalisation représenté dans les figures, le rapport Dc/Ds est de l'ordre de 1.2 - 1.3. Cela permet de rendre encore plus efficace la fonction anti-éjection du rayonnage.
- Selon un mode de réalisation, deux logements consécutifs appartenant respectivement au premier et au deuxième ensembles de logements sont conformés de manière à maintenir leurs rayons selon deux directions tangentielles formant ensemble un angle α compris entre 50° et 160° et de préférence compris entre 70° et 130°. L'angle α est défini par l'angle formé par les deux directions tangentielles des rayons qui se croisent et qui est tourné au regard de l'axe XX du moyeu.
- Selon un mode de réalisation, le flasque présente des protubérances, chaque protubérance portant au moins un logement appartenant au premier et/ou au deuxième ensemble de logements.
- Selon un mode de réalisation, chaque protubérance porte au moins deux logements appartenant au premier et au deuxième ensembles de logements.

Selon un mode de réalisation, l'invention concerne un ensemble comprenant un moyeu selon l'un quelconque des modes de réalisation mentionnés précédemment et des rayons configurés pour coopérer avec les logements portés par le moyeu.

Facultativement, l'ensemble selon l'invention comporte au moins l'une quelconque des caractéristiques suivantes prises séparément ou en combinaison.
- Selon un mode de réalisation, chaque rayon comporte à l'une de ses extrémités une tête conformée pour s'engager dans un logement et à l'autre de ses extrémités un filetage ou des moyens de fixations destiné à coopérer avec une jante.
- Selon un mode de réalisation, les logements sont conformés de manière à ce que chaque rayon maintenu dans un logement du premier ensemble de logements croise au moins un rayon maintenu dans un logement du deuxième ensemble de logements.
- Selon un mode de réalisation, deux logements consécutifs appartenant respectivement au premier et au deuxième ensemble de logements sont conformés de manière à ce que leurs rayons se croisent à une distance Dr de leurs sièges, la distance Dr étant mesurée selon la direction principale d'extension du rayon, Dr étant inférieure à 50 mm et de préférence Dr étant inférieure à 30 mm. Cela permet de rendre encore plus efficace la fonction anti-éjection du rayonnage.

Selon un mode de réalisation, l'invention concerne un procédé de montage d'un ensemble selon l'invention, comprenant les étapes suivantes:
- insérer un premier rayon dans un premier logement pris dans l'un des deux ensembles pris parmi le premier et le deuxième sous-ensemble de logements, en introduisant la tête de ce premier rayon à travers l'ouverture de ce premier logement jusqu'à positionner la tête de ce premier rayon sur le siège de ce premier logement et la tige de ce premier rayon dans l'embouchure de ce premier logement, de manière à ce que ce premier rayon s'étende tangentiellement à l'axe XX ;
- insérer un deuxième rayon dans un deuxième logement pris dans l'autre des deux ensembles pris parmi le premier et le deuxième ensemble de logements, en positionnant la tête de ce deuxième rayon entre ledit premier rayon et l'ouverture du deuxième logement, puis en introduisant la tête de ce deuxième rayon à travers l'ouverture de ce deuxième logement jusqu'à positionner la tête de ce deuxième rayon sur le siège de ce deuxième logement et la tige de ce deuxième logement dans l'embouchure de ce deuxième logement de manière à ce que ce deuxième rayon s'étende tangentiellement à l'axe XX et croise le premier rayon.

Selon un mode de réalisation, l'invention concerne une roue pour cycle comprenant un ensemble selon l'un quelconque des modes de réalisation mentionnés précédemment et une jante conformée pour coopérer avec une extrémité des rayons.

Selon un mode de réalisation, l'invention concerne un cycle équipé d'au moins une telle roue.

Les autres objets, caractéristiques et avantages de la présente invention apparaîtront à l'examen de la description suivante et des dessins d'accompagnement. Il est entendu que d'autres avantages peuvent être incorporés.

### INTRODUCTION DES DESSINS

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- La figure 1 illustre une roue comprenant un exemple de moyeu selon l'invention.
- La figure 2 est une vue en perspective d'un moyeu selon un mode de réalisation non limitatif de l'invention.
- La figure 3 est une vue partielle du moyeu de la figure 2 vue du dessus, centrée sur l'un de ses flasques, et selon deux coupes comprenant la direction d'extension principale de deux rayons consécutifs.
- La figure 4 reprend la vue de la figure 3 avec une inclinaison autour d'une direction horizontale et perpendiculaire à l'axe XX de la rotation du moyeu.
- La figure 5 est une vue partielle d'un flasque du moyeu et des rayons selon l'axe XX de rotation du moyeu.
- La figure 6 est une vue agrandie de l'une des protubérances formées par le flasque illustré en figure 5.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DETAILLEE

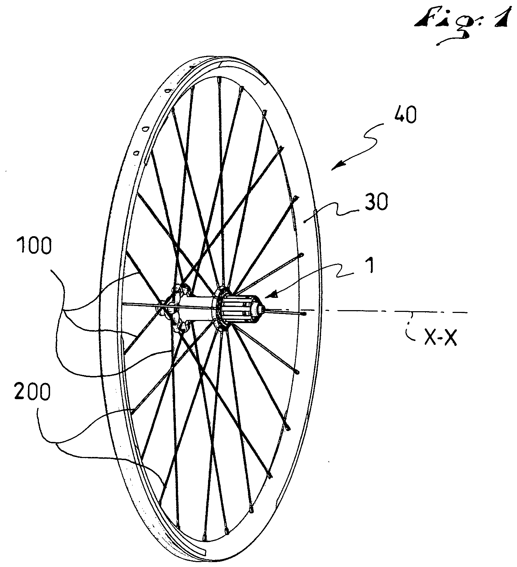

Des exemples de moyeu selon l'invention et de roue comprenant un tel moyeu vont maintenant être décrits en référence aux figures 1 à 6.

Comme illustré en figure 1, une roue 40 selon l'invention comporte une jante 30 destinée à recevoir une bande de roulement telle qu'un pneu, un moyeu 1 et des rayons 110a, 110b assurant la liaison mécanique entre le moyeu 1 et la jante 30.

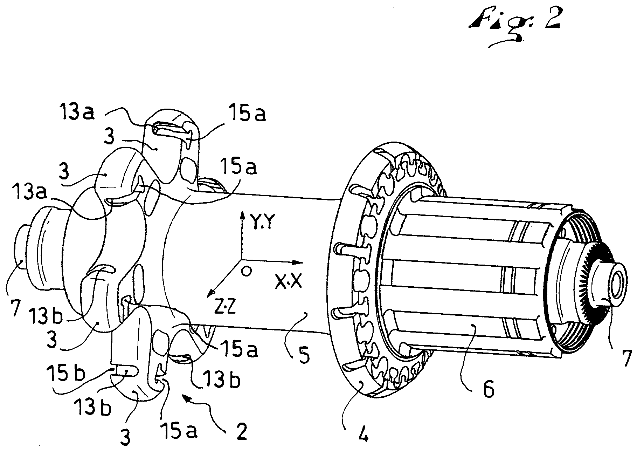

Les rayons forment deux nappes 100, 200 de rayons de part et d'autre d'un plan médian du moyeu 1. Le moyeu 1 étant destiné à tourner autour d'un axe référencé XX, le plan médian, perpendiculaire à l'axe XX, est référencé Y0Z. Ces directions sont illustrées en figure 2.

Le moyeu 1 peut être un moyeu moteur, c'est-à-dire destiné à être entraîné en rotation par un dispositif d'entraînement tel qu'un moteur, ou le plus souvent par une chaîne, une courroie ou des engrenages eux-mêmes entraînés en rotation par un pédalier et/ou un moteur.

C'est un moyeu de ce type qui est illustré sur les exemples non limitatifs des figures. Le moyeu 1 comporte alors par exemple un corps 5 de moyeu recevant les rayons 110a, 110b, des embouts 7 d'extrémité pour la fixation du moyeu 1 au cadre du cycle et un corps 6 de roue libre couplé en rotation avec le dispositif d'entraînement.

Alternativement, un moyeu selon l'invention peut-être un moyeu non moteur, appelé également moyeu libre, ce qui est généralement le cas pour un moyeu de roue avant de cycle.

Quel que soit le type de moyeu, moteur ou libre, il comporte des logements 11a, 11b conformés chacun pour recevoir l'extrémité d'un rayon 110a, 110b.

De préférence, ces logements 11a, 11b se répartissent sur deux flasques 3,4 maintenant chacun l'une des deux nappes 100, 200 de rayons qui sont fixés au moyeu 1 de part et d'autre du plan médian Y0Z de ce dernier.

Au moins l'une des deux nappes de rayons comprend des rayons qui s'étendent tangentiellement à l'axe XX du moyeu 1. Dans le mode de réalisation représenté, cette nappe, qui porte le signe de référence 100 est fixée par un flasque désigné premier flasque 2 dans la présente description.

L'autre nappe 200 de rayons portée un flasque désigné deuxième flasque 4, peut avoir des rayons qui s'étendent également de manière tangentielle à l'axe XX du moyeu. Dans l'exemple illustré les rayons de la deuxième nappe s'étendent de manière radiale à l'axe XX du moyeu.

La première nappe 100 de rayons, c'est-à-dire celle formée par les rayons s'étendant tangentiellement, est fixée au moyeu par des logements 11a, 11b répartis en deux ensembles également désignés sous-ensembles. Les logements 11a d'un premier ensemble de logements maintiennent un premier ensemble de rayons 110a et les logements 11b d'un deuxième ensemble de logements maintiennent un deuxième ensemble de rayons 110b.

Par exemple, l'un parmi le premier ensemble 110a et le deuxième ensemble 110b de rayons comprend les rayons dits « tracteurs », c'est-à-dire les rayons qui transmettent à la jante 30 l'effort de traction.

Les rayons de l'autre ensemble parmi le premier ensemble 110a et le deuxième ensemble 110b de rayons qualifiés de « non-tracteurs » s'étendent tangentiellement dans un sens de rotation opposé à celui des rayons tracteurs.

Les rayons 110a, 110b présentent au moins à leur extrémité fixée au moyeu 1, une tête 111a, 111b. Cette tête 111a, 111b peut être rapportée sur la tige du rayon. Elle est de préférence venue de matière avec la tige, formant ainsi un rayon monolithique peu coûteux et robuste.

Chaque logement 11a, 11b est configuré pour maintenir la tête 111a, 111b d'un rayon, en assurant une butée selon la direction tangentielle au moins selon le sens de traction du rayon 110a, 110b.

Ainsi, l'ouverture communique avec la cavité 12a, 12b et le siège 14a, 14b.

A cet effet, chaque logement 11a, 11b comporte selon une direction tangentielle une cavité 12a, 12b principale et une embouchure 13a, 13b de plus petite dimension que la cavité 12a, 12b principale de telle façon qu'une surface de logement 11a, 11b et l'embouchure 13a, 13b définissent un siège 14a, 14b conformé pour retenir la tête 111a, 111b du rayon.

L'embouchure 13a, 13b permet à la tige du rayon 110a, 110b de s'étendre tangentiellement lorsque la tête 111a, 111b du rayon est positionnée sur le siège 14a, 14b. Le logement 11a, 11b comprend également une ouverture 15a, 15b conformée pour permettre l'introduction de la tête 111a, 111b du rayon 110a, 110b dans le logement 11a, 11b pour son positionnement sur le siège 14a, 14b.

De préférence, la tête 111a, 111b ne peut être extraite du logement 11a, 11b qu'en passant au travers de l'ouverture. Selon un mode de réalisation illustré, pour son insertion dans le logement, la tête 111a, 111b du rayon doit obligatoirement passer par l'ouverture.

L'ouverture débouche selon une direction parallèle à l'axe XX. Ainsi, elle est accessible par un mouvement effectué au moins selon une direction parallèle à l'axe XX.

De préférence, mais de manière non limitative, l'ouverture 15a, 15b débouche uniquement selon une direction parallèle à l'axe XX.

Avantageusement, les logements 11a du premier ensemble sont ouverts vers l'intérieur (int) du moyeu 1. Leurs ouvertures 15a sont tournées au regard du plan médian Y0Z du moyeu 1.

Les logements 11b du deuxième ensemble sont ouverts vers l'extérieur (ext) du moyeu.

Ainsi, sur la figure 2, où la face interne du premier flasque 2 est visible, les ouvertures 15a des logements du premier ensemble sont visibles et les ouvertures 15b des logements du deuxième ensemble ne sont pas visibles. Leurs ouvertures sont tournées au regard de la direction opposée à celle du plan médian Y0Z. Ils sont donc ouverts vers une direction s'éloignant du plan médian.

Ainsi les têtes de rayon 111a du premier ensemble de rayons ne peuvent être introduits et respectivement extraits de leurs logements qu'en effectuant un mouvement axial dirigé vers l'extérieur et respectivement vers l'intérieur du moyeu et vice-versa pour les têtes 111a de rayon du deuxième ensemble de rayons.

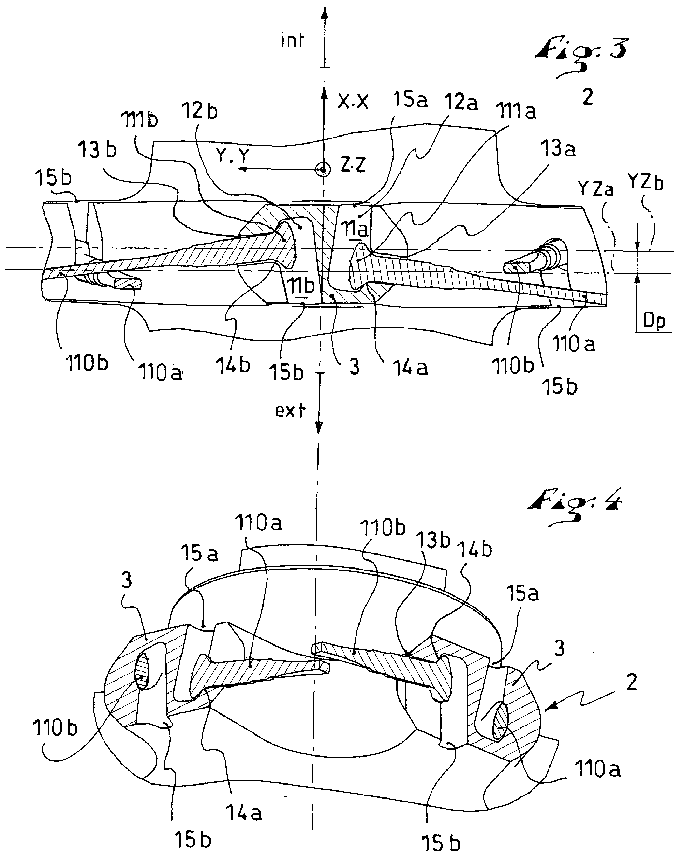

Par ailleurs, de manière avantageuse, les sièges 14a des logements du premier ensemble 11a de logements sont plus éloignés du plan médian Y0Z que les sièges 14b des logements du deuxième ensemble 11b de logements. Cette distance mesurée selon une direction parallèle à l'axe XX, entre le plan radial contenant les sièges 14a des logements du premier ensemble 11a et le plan radial contenant les sièges 14b des logements 11b du deuxième ensemble est noté Dp sur la figure 3. De préférence, Dp est comprise entre 0,2 et 5 mm et de préférence entre 0,9 et 3,5 mm.

Ainsi, les rayons 110a placés dans les logements 11a du premier ensemble de logements, ne peuvent être éjectés que par l'ouverture 15a tournée vers l'intérieur du moyeu 1. Or ces rayons 110a, de par les positionnements respectifs des sièges 14a, 14b des premier et deuxième ensembles, se trouvent bloqués par les rayons 110b associés au deuxième ensemble 11b de logements, qui, eux, ne peuvent être éjectés que par l'extérieur du moyeu 1.

Les rayons 110a associés au premier ensemble 11a de logements sont donc bloqués par les rayons 110b associés au deuxième ensemble 11b de logements et ne peuvent sortir involontairement par leurs ouvertures axiales 15a.

Il en est de même pour les rayons 110b associés au deuxième ensemble 11b de logements qui sont donc bloqués par les rayons110a associés au premier ensemble 11a de logements.

L'invention permet ainsi d'éviter que les têtes 111a, 111b de rayons sortent de leurs logements 11a, 11b.

Cette configuration du moyeu 1 offre ainsi un rayonnage anti-éjection particulièrement efficace.

Comme illustré sur les figures 3 et 4. Le plan YZa qui contient les sièges 14a du premier ensemble 11a de logements est plus éloigné du plan médian Y0Z que le plan contenant les ouvertures 14a d'extraction de la tête 111a des rayons 110a et que le plan YZb contenant les sièges 14b des rayons 110b.

De préférence, les plans YZa et YZb sont distants d'une distance Dp, mesurée parallèlement à l'axe XX, Dp étant supérieure à 0,2 mm et de préférence supérieure à 0,9 mm et de préférence comprise entre 0,9 et 3,5 mm.

On voit bien sur les figures 3 et 4 que chaque rayon d'un ensemble de rayons est bloqué par un rayon de l'autre ensemble de rayons.

Ce blocage est d'autant plus efficace que les rayons se croisent à proximité de leur siège.

De préférence, deux logements consécutifs 11a, 11b appartenant respectivement au premier et au deuxième ensemble de logements sont conformés de manière à ce que leurs rayons 110a, 110b se croisent à une distance Dc de l'axe XX , la distance entre l'axe XX et les sièges 14a, 14b de ces logements étant de Ds, les distances Dc et Ds étant mesurées selon une direction radiale à l'axe XX et le rapport Dc/Ds étant inférieur à 2.5, de préférence inférieur à 2, de préférence, inférieur à 1.5.

De préférence, deux rayons 110a, 110b qui se croisent forment un angle α compris entre 50° et 160° et de préférence compris entre 70° et 130° et de préférence de 90°. L'angle α est défini par l'angle formé par les deux directions tangentielles des rayons qui se croisent 110a, 110b et qui est tourné au regard de l'axe XX du moyeu 1 .

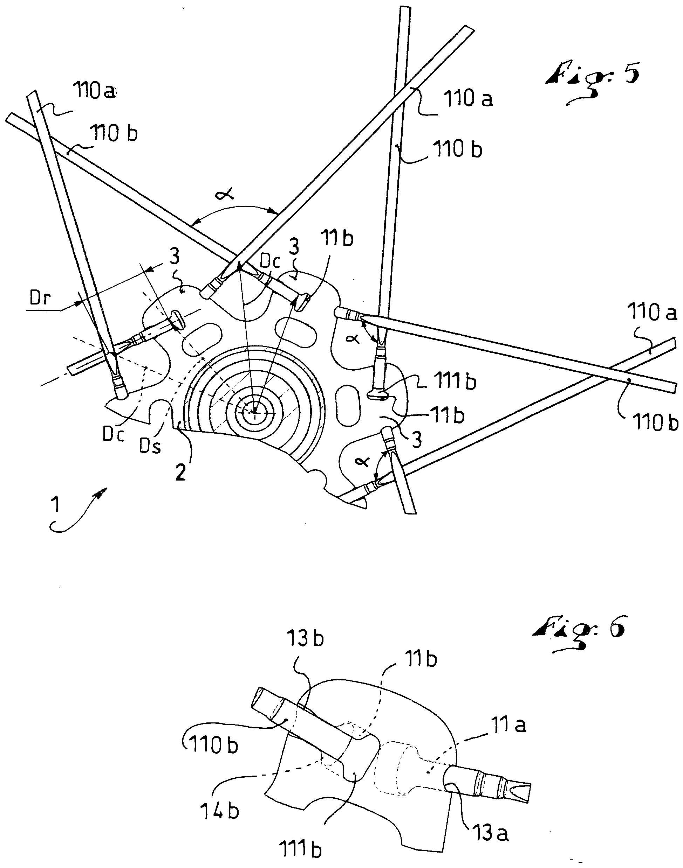

De préférence, deux logements consécutifs 11a, 11b appartenant respectivement au premier 11a et au deuxième 11b ensemble de logements sont conformés de manière à ce que leurs rayons 110a, 110b se croisent à une distance Dr de leurs sièges 14a, 14b, la distance Dr étant mesurée selon la direction principale d'extension du rayon, Dr étant inférieure à 50 mm et de préférence Dr étant inférieure à 30 mm. Les rayons du premier et du deuxième ensembles peuvent se croiser plusieurs fois. Ainsi, comme cela est visible à la figure 5 les rayons de la roue selon le mode de réalisation décrit se croisent deux fois.

Ces configurations contribuent toutes à rendre encore plus efficace la réaction anti-éjection.

Selon le mode de réalisation illustré, le premier flasque 2 présente des protubérances 3 portant un logement 11a du premier ensemble et un logement 11b du deuxième ensemble. Cela est clairement illustré sur les figures 2, 3, 4. Chaque protubérance 3 comprend une paire de premières faces principalement contenues dans un plan s'étendant de manière radiale à l'axe XX, chacune de ces faces portent une ouverture 15a, 15b.

Chaque protubérance 3 porte également une paire de deuxièmes faces principalement contenues dans des plans contenant l'axe XX et dont la normale forme une tangente. Ces deuxièmes faces portent chacune une embouchure 13a, 13b.

Cette configuration permet d'avoir des rayons rapprochés tout en réduisant la quantité de matière de flasque 2, limitant de ce fait le poids de ce dernier.

De préférence, les deux logements 11a, 11b portés par une même protubérance 3 maintiennent des rayons 110a, 110b qui ne se croisent pas.

En revanche, deux protubérances 3 consécutives ont l'une de leurs deuxièmes faces en regard. Ces deux deuxièmes faces en regard portent chacune une embouchure 13a, 13b depuis lesquelles sortent deux rayons 110a, 110b qui se croisent.

De manière avantageuse, le flasque 2 présente, selon une rotation autour de l'axe XX, une alternance de logements appartenant au premier 11a et au deuxième 11b ensembles de logements.

Afin d'assembler une roue selon l'invention, les étapes suivantes notamment peuvent être mises en oeuvre :
- insérer un premier rayon dans un premier logement pris parmi le premier 11a et le deuxième 11b ensembles de logements en introduisant la tête de ce premier rayon à travers l'ouverture de ce premier logement jusqu'à positionner la tête sur le siège de ce premier logement et la tige de ce premier rayon dans l'embouchure de ce premier logement, de manière à ce que ce premier rayon s'étende tangentiellement à l'axe XX ;
- insérer un deuxième rayon dans un deuxième logement pris parmi le premier 11a et le deuxième 11b ensembles de logements, en positionnant la tête de ce deuxième rayon entre le premier rayon et l'ouverture du deuxième logement, puis en introduisant la tête de ce deuxième rayon à travers l'ouverture de ce deuxième logement jusqu'à positionner la tête de ce deuxième rayon sur le siège de ce deuxième logement et la tige de ce deuxième logement dans l'embouchure de manière à ce que ce deuxième rayon s'étende tangentiellement à l'axe XX et croise le premier rayon.

Ce procédé d'assemblage permet d'obtenir de manière simple et fiable un rayonnage limitant les risques d'éjection.

Au vu de la description qui précède, il apparaît clairement que l'invention permet de réduire considérablement les risques de détachement involontaire de la tête du rayon. Par ailleurs, le plan contenant les sièges les plus proches du plan médian YOZ sont relativement éloignés de ce dernier, autorisant ainsi un bon équilibrage de la roue et une répartition homogène des contraintes sur l'ensemble des rayons.

En outre, l'invention est compatible avec des rayons présentant une tête à chacune de leurs extrémités.

L'invention autorise également les procédés de montage dans lesquels les rayons sont amenés au poste de montage avec leur écrou.

L'invention n'est pas limitée aux seuls modes de réalisation illustrés et décrits précédemment. Elle s'étend à tout autre mode de réalisation entrant dans la portée des revendications.

Par exemple, les logements configurés pour assurer la fonction anti-éjection décrite ci-dessus, peuvent être portés par l'un seulement des flasques comme illustré sur les figures ou peuvent être portés par les deux flasques disposés de part et d'autre du plan médian.

Par ailleurs, la nappe de rayons logés dans ce logement anti-éjection peut être la nappe la plus proche du corps de roue libre ou être au contraire la plus éloignée du corps de roue libre comme illustré sur les figures.

En outre, un moyeu selon l'invention peut être un moyeu moteur comme illustré ou un moyeu libre, c'est-à-dire non couplé à un dispositif d'entraînement. Typiquement, l'invention s'étend au cycle comportant deux moyeux selon l'invention, l'un équipant une roue avant et l'autre une roue arrière.

En outre, les formes des logements peuvent être différentes de celles illustrées, sans pour autant sortir de la protection conférée par les revendications.

### REFERENCES

- 1.: Moyeu
- 2.: Première flasque
- 3.: Protubérance
- 4.: Deuxième flasque
- 5.: Corps de moyeu
- 6.: Corps de roue libre
- 7.: Embouts

- 11a.: Logement du premier ensemble
- 12a.: Cavité du premier ensemble
- 13a.: Embouchure du premier ensemble
- 14a.: Siège du premier ensemble
- 15a.: Ouverture du premier ensemble

- 11b.: Logement du deuxième ensemble
- 12b.: Cavité du deuxième ensemble
- 13b.: Embouchure du deuxième ensemble
- 14b.: Siège du deuxième ensemble
- 15b.: Ouverture du deuxième ensemble
- 30.: Jante
- 40.: Roue
- 100.: 1^{ère} nappe de rayons
- 110a.: Rayon du premier ensemble
- 111a.: Tête de rayon du premier ensemble
- 110b.: Rayon du deuxième ensemble
- 111b.: Tête de rayon du deuxième ensemble
- 200.: deuxième nappe de rayons

## Revendications

1. Moyeu (1) pour roue (40) de cycle, le moyeu comprenant un corps (5) de moyeu configuré pour tourner autour d'un axe XX et conformé pour recevoir au moins deux nappes (100, 200) de rayons disposées de part et d'autre d'un plan médian Y0Z du moyeu (1) perpendiculaire à l'axe XX et destinées à assurer une liaison mécanique entre le moyeu (1) et une jante (30) de la roue (40), le corps (5) de moyeu comprenant au moins un flasque (2) comportant un premier et un deuxième ensembles de logements (11a, 11b),
dans lequel chaque logement (11a, 11b) :
- est conformé pour loger au moins une tête (111a, 111b) d'un rayon (110a, 110b) de l'une desdites nappes (100) et pour maintenir ledit rayon (110a, 110b) selon une direction tangentielle audit axe XX :
- définit un siège (14a, 14b) conformé pour retenir la tête (111a, 111b) dudit rayon (110a, 110b) selon une direction tangentielle audit axe XX ;
- comprend une ouverture (15a, 15b) communicante avec le siège et débouchant selon une direction axiale parallèle audit axe XX ;
- les ouvertures (15a) du premier ensemble (11a) de logements étant tournées au regard du plan médian Y0Z et les ouvertures (15b) du deuxième ensemble de logements (11b) étant tournées vers une direction opposée à celle du plan médian Y0Z,
**caractérisé en ce que** :
- les sièges (14a) des logements (11a) du premier ensemble de logements sont axialement plus éloignés du plan médian Y0Z que les sièges (14b) des logements (11b) du second ensemble de logements.

2. Moyeu (1) selon l'une des revendications précédentes, dans lequel chaque logement (11a, 11b) des premier et deuxième ensembles de logements est conformé de manière à permettre un positionnement du rayon (110, 110b) qu'il maintient, uniquement en passant par ladite ouverture (15a, 15b) du logement (11a, 11b).

3. Moyeu (1) selon l'une quelconque des revendications précédentes, dans lequel chaque logement (11a, 11b) des premier et deuxième ensembles de logements est conformé de manière à permettre un positionnement du rayon (110, 110b) qu'il maintient uniquement en effectuant une introduction de la tête du rayon (111a, 111b) à travers l'ouverture (15a, 15b) selon un mouvement comprenant au moins une translation axiale.

4. Moyeu (1) selon l'une quelconque des revendications précédentes, dans lequel les sièges (14a) des logements (11a) du premier ensemble sont disposés dans un plan YZa perpendiculaire à l'axe XX et les sièges (14b) des logements (11b) du deuxième ensemble sont disposés dans un plan YZb perpendiculaire à l'axe XX, les plans YZa et YZb étant distants d'une distance Dp, mesurée selon l'axe XX inférieure à 10 mm, de préférence comprise entre 0,2 et 10 mm.

5. Moyeu (1) selon la revendication précédente, dans lequel Dp est comprise entre 0,2 et 5 mm et de préférence entre 0,9 et 3,5 mm.

6. Moyeu (1) selon l'une quelconque des revendications précédentes, dans lequel le flasque (2) présente, selon une rotation autour de l'axe XX, une alternance de logements appartenant au premier (11a) et au deuxième (11b) ensembles de logements.

7. Moyeu (1) selon l'une quelconque des revendications précédentes, dans lequel les logements (11a, 11b) sont conformés de manière à ce que chaque rayon (110a) maintenu dans un logement (11a) du premier ensemble de logements croise au moins un rayon (110b) maintenu dans un logement (11b) du deuxième ensemble de logements.

8. Moyeu (1) selon l'une quelconque des revendications précédentes, dans lequel deux logements (11a, 11b) consécutifs appartenant respectivement au premier et au deuxième ensemble de logements sont conformés de manière à ce que les rayons (110a, 110b) qu'ils maintiennent se croisent à une distance Dc de l'axe XX, la distance entre l'axe XX et les sièges (14a, 14b) de ces logements étant de Ds, les distances Dc et Ds étant mesurées selon une direction radiale à l'axe XX et le rapport Dc/Ds étant inférieur à 2.5.

9. Moyeu (1) selon la revendication précédente, dans lequel le rapport Dc/Ds est inférieur à 2, de préférence et le rapport Dc/Ds est inférieur à 1.5.

10. Moyeu (1) selon la revendication précédente, dans lequel le rapport Dc/Ds est compris entre 1,2 et 1,3.

11. Moyeu (1) selon l'une quelconque des revendications précédentes, dans lequel deux logements (11a, 11b) consécutifs appartenant respectivement au premier (11a) et au deuxième (11b) ensembles de logements sont conformés de manière à maintenir leurs rayons (110a, 110b) selon deux directions tangentielles formant ensemble un angle α compris entre 50° et 160° et de préférence compris entre 70° et 130°.

12. Moyeu (1) selon l'une quelconque des revendications précédentes, dans lequel le flasque (2) présente des protubérances (3), chaque protubérance (3) portant au moins logements (11a, 11b) appartenant au premier et/ou au deuxième ensembles de logements.

13. Moyeu (1) selon la revendication précédente, dans lequel chaque protubérance (3) porte au moins logements (11a, 11b) appartenant au premier (11a) et au deuxième (11b) ensembles de logements.

14. Ensemble comprenant un moyeu (1) selon l'une quelconque des revendications précédentes, et des rayons (110a, 110b) configurés pour coopérer avec les logements (11a, 11b) portés par le moyeu (1).

15. Ensemble selon la revendication précédente, dans lequel chaque rayon (110a, 110b) comporte à l'une de ses extrémités une tête (111a, 111b) conformée pour s'engager dans un logement (11a, 11b) et à l'autre de ses extrémités, un filetage ou des moyens de fixations destinés à coopérer avec une jante (30).

16. Ensemble selon l'une quelconque des deux revendications précédentes, dans lequel les logements (11a, 11b) sont conformés de manière à ce que chaque rayon (110a) maintenu dans un logement du premier ensemble (11a) de logements croise au moins un rayon (110b) maintenu dans un logement du deuxième ensemble (11b) de logements.

17. Ensemble selon l'une quelconque des trois revendications précédentes, dans lequel deux logements (11a, 11b) consécutifs appartenant respectivement au premier (11a) et au deuxième (11b) ensemble de logements sont conformés de manière à ce que leurs rayons (110a, 110b) se croisent à une distance Dr de leurs sièges (14a, 14b), la distance Dr étant mesurées selon la direction principale d'extension du rayon, Dr étant inférieure à 50 mm et de préférence Dr étant inférieure à 30 mm.

18. Procédé de montage d'un ensemble selon l'une quelconque des quatre revendications précédentes, comprenant les étapes suivantes:
- insérer un premier rayon dans un premier logement pris parmi le premier (11a) et le deuxième (11b) ensembles de logements en introduisant la tête de ce premier rayon à travers l'ouverture de ce premier logement jusqu'à positionner la tête de ce premier rayon sur le siège de ce premier logement et la tige de ce premier rayon dans l'embouchure de ce premier logement, de manière à ce que ce premier rayon s'étende tangentiellement à l'axe XX ;
- insérer un deuxième rayon dans un deuxième logement pris parmi l'autre parmi le premier (11a) et le deuxième (11b) ensembles de logements, en positionnant la tête de ce deuxième rayon entre ledit premier rayon et l'ouverture du deuxième logement, puis en introduisant la tête de ce deuxième rayon à travers l'ouverture de ce deuxième logement jusqu'à positionner la tête de ce deuxième rayon sur le siège de ce deuxième logement et la tige de ce deuxième logement dans l'embouchure de ce deuxième logement de manière à ce que ce deuxième rayon s'étende tangentiellement à l'axe XX et croise le premier rayon.

19. Roue (40) pour cycle comprenant un ensemble selon l'une quelconque des revendications 14 à 17 et une jante (30) conformée pour coopérer avec une extrémité des rayons (110a, 110b).

20. Cycle équipé d'au moins une roue (40) selon la revendication précédente.

## Patentansprüche

1. Nabe (1) für ein Rad (40) eines Fahrrads, wobei die Nabe einen Nabenkörper (5) enthält, der konfiguriert ist, um eine Achse XX zu drehen, und gestaltet ist, um mindestens zwei Lagen (100, 200) von Speichen aufzunehmen, die zu beiden Seiten einer Mittelebene Y0Z der Nabe (1) lotrecht zur Achse XX angeordnet und dazu bestimmt sind, eine mechanische Verbindung zwischen der Nabe (1) und einer Felge (30) des Rads (40) zu gewährleisten, wobei der Nabenkörper (5) mindestens einen Flansch (2) enthält, der eine erste und eine zweite Einheit von Aufnahmen (11a, 11b) aufweist,
wobei jede Aufnahme (11a, 11b):
- gestaltet ist, um mindestens einen Kopf (111a, 111b) einer Speiche (110a, 110b) einer der Lagen (100) aufzunehmen und die Speiche (110a, 110b) gemäß einer Richtung tangential zur Achse XX zu halten;
- einen Sitz (14a, 14b) definiert, der gestaltet ist, um den Kopf (111a, 111b) der Speiche (110a, 110b) gemäß einer Richtung tangential zur Achse XX zurückzuhalten;
- eine Öffnung (15a, 15b) enthält, die mit dem Sitz in Verbindung steht und gemäß einer axialen Richtung parallel zur Achse XX mündet;
- wobei die Öffnungen (15a) der ersten Einheit (11a) von Aufnahmen zur Mittelebene Y0Z hin gerichtet sind, und die Öffnungen (15b) der zweiten Einheit von Aufnahmen (11b) in eine Richtung entgegengesetzt zu derjenigen der Mittelebene Y0Z gerichtet sind,
**dadurch gekennzeichnet, dass**:
- die Sitze (14a) der Aufnahmen (11a) der ersten Einheit von Aufnahmen axial weiter von der Mittelebene Y0Z entfernt sind als die Sitze (14b) der Aufnahmen (11b) der zweiten Einheit von Aufnahmen.

2. Nabe (1) nach dem vorhergehenden Anspruch, wobei jede Aufnahme (11a, 11b) der ersten und zweiten Einheiten von Aufnahmen so gestaltet ist, dass sie eine Positionierung der Speiche (110, 110b), die sie hält, nur durch Durchgang durch die Öffnung (15a, 15b) der Aufnahme (11a, 11b) ermöglicht.

3. Nabe (1) nach einem der vorhergehenden Ansprüche, wobei jede Aufnahme (11a, 11b) der ersten und zweiten Einheiten von Aufnahmen so gestaltet ist, dass sie eine Positionierung der Speiche (110, 110b), die sie hält, nur durch Ausführen einer Einführung des Kopfes der Speiche (111a, 111b) durch die Öffnung (15a, 15b) gemäß einer Bewegung ermöglicht, die mindestens eine axiale Translationsverschiebung enthält.

4. Nabe (1) nach einem der vorhergehenden Ansprüche, wobei die Sitze (14a) der Aufnahmen (11a) der ersten Einheit in einer Ebene YZa lotrecht zur Achse XX angeordnet sind, und die Sitze (14b) der Aufnahmen (11b) der zweiten Einheit in einer Ebene YZb lotrecht zur Achse XX angeordnet sind, wobei die Ebenen YZa und YZb einen Abstand Dp, gemessen gemäß der Achse XX, kleiner als 10 mm haben, der vorzugsweise zwischen 0,2 und 10 mm liegt.

5. Nabe (1) nach dem vorhergehenden Anspruch, wobei Dp zwischen 0,2 und 5 mm und vorzugsweise zwischen 0,9 und 3,5 mm liegt.

6. Nabe (1) nach einem der vorhergehenden Ansprüche, wobei der Flansch (2) gemäß einer Drehung um die Achse XX eine Wechselfolge von Aufnahmen aufweist, die zu den ersten (11a) und zweiten (11b) Einheiten von Aufnahmen gehören.

7. Nabe (1) nach einem der vorhergehenden Ansprüche, wobei die Aufnahmen (11a, 11b) so gestaltet sind, dass jede in einer Aufnahme (11a) der ersten Einheit von Aufnahmen gehaltene Speiche (110a) mindestens eine in einer Aufnahme (11b) der zweiten Einheit von Aufnahmen gehaltene Speiche (110b) kreuzt.

8. Nabe (1) nach einem der vorhergehenden Ansprüche, wobei zwei aufeinanderfolgende Aufnahmen (11a, 11b), die zur ersten bzw. zweiten Einheit von Aufnahmen gehören, so gestaltet sind, dass die Speichen (110a, 110b), die sie halten, sich in einem Abstand Dc von der Achse XX kreuzen, wobei der Abstand zwischen der Achse XX und den Sitzen (14a, 14b) dieser Aufnahmen Ds beträgt, wobei die Abstände Dc und Ds gemäß einer Richtung radial zur Achse XX gemessen werden und das Verhältnis Dc/Ds niedriger als 2,5 ist.

9. Nabe (1) nach dem vorhergehenden Anspruch, wobei das Verhältnis Dc/Ds vorzugsweise niedriger als 2 ist, und das Verhältnis Dc/Ds niedriger als 1,5 ist.

10. Nabe (1) nach dem vorhergehenden Anspruch, wobei das Verhältnis Dc/Ds zwischen 1,2 und 1,3 liegt.

11. Nabe (1) nach einem der vorhergehenden Ansprüche, wobei zwei aufeinanderfolgende Aufnahmen (11a, 11b), die zur ersten (11a) bzw. zweiten (11b) Einheit von Aufnahmen gehören, so gestaltet sind, dass sie ihre Speichen (110a, 110b) gemäß zwei Tangentialrichtungen halten, die miteinander einen Winkel zwischen 50° und 160° und vorzugsweise zwischen 70° und 130° bilden.

12. Nabe (1) nach einem der vorhergehenden Ansprüche, wobei der Flansch (2) Vorsprünge (3) aufweist, wobei jeder Vorsprung (3) mindestens Aufnahmen (11a, 11b) trägt, die zur ersten und/oder zur zweiten Einheit von Aufnahmen gehören.

13. Nabe (1) nach dem vorhergehenden Anspruch, wobei jeder Vorsprung (3) mindestens Aufnahmen (11a, 11b) trägt, die zur ersten (11a) und zur zweiten (11b) Einheit von Aufnahmen gehören.

14. Einheit, die eine Nabe (1) nach einem der vorhergehenden Ansprüche und Speichen (110a, 110b) enthält, die konfiguriert sind, mit den von der Nabe (1) getragenen Aufnahmen (11a, 11b) zusammenzuwirken.

15. Einheit nach dem vorhergehenden Anspruch, wobei jede Speiche (110a, 110b) an einem ihrer Enden einen Kopf (111a, 111b), der gestaltet ist, um sich in eine Aufnahme (11a, 11b) einzuführen, und am anderen ihrer Enden ein Gewinde oder Befestigungseinrichtungen trägt, die dazu bestimmt sind, mit einer Felge (30) zusammenzuwirken.

16. Einheit nach einem der zwei vorhergehenden Ansprüche, wobei die Aufnahmen (11a, 11b) so gestaltet sind, dass jede in einer Aufnahme der ersten Einheit (11a) von Aufnahmen gehaltene Speiche (110a) mindestens eine in einer Aufnahme der zweiten Einheit (11b) von Aufnahmen gehaltene Speiche (110b) kreuzt.

17. Einheit nach einem der drei vorhergehenden Ansprüche, wobei zwei aufeinanderfolgende Aufnahmen (11a, 11b), die zur ersten (11a) bzw. zweiten (11b) Einheit von Aufnahmen gehören, so gestaltet sind, dass ihre Speichen (110a, 110b) sich in einem Abstand Dr von ihren Sitzen (14a, 14b) kreuzen, wobei der Abstand Dr gemäß der Hauptausdehnungsrichtung der Speiche gemessen wird, wobei Dr geringer als 50 mm und vorzugsweise geringer als 30 mm ist.

18. Verfahren zur Montage einer Einheit nach einem der vier vorhergehenden Ansprüche, das die folgenden Schritte enthält:
- Einfügen einer ersten Speiche in eine erste Aufnahme von der ersten (11a) und zweiten (11b) Einheiten von Aufnahmen, indem der Kopf dieser ersten Speiche durch die Öffnung dieser ersten Aufnahme eingeführt wird, bis der Kopf dieser ersten Speiche auf dem Sitz dieser ersten Aufnahme und die Stange dieser ersten Speiche in der Mündung dieser ersten Aufnahme positioniert ist, damit diese erste Speiche sich tangential zur Achse XX erstreckt;
- Einfügen einer zweiten Speiche in eine zweite Aufnahme von der anderen der ersten (11a) und zweiten (11b) Einheiten von Aufnahmen, indem der Kopf dieser zweiten Speiche zwischen der ersten Speiche und der Öffnung der zweiten Aufnahme positioniert wird, dann indem der Kopf dieser zweiten Speiche durch die Öffnung dieser zweiten Aufnahme eingeführt wird, bis der Kopf dieser zweiten Speiche auf dem Sitz dieser zweiten Aufnahme und die Stange dieser zweiten Speiche in der Mündung dieser zweiten Aufnahme positioniert ist, damit diese zweite Speiche sich tangential zur Achse XX erstreckt und die erste Speiche kreuzt.

19. Rad (40) für ein Fahrrad, das eine Einheit nach einem der Ansprüche 14 bis 17 und eine Felge (30) enthält, die gestaltet ist, um mit einem Ende der Speichen (110a, 110b) zusammenzuwirken.

20. Fahrrad, das mit mindestens einem Rad (40) nach dem vorhergehenden Anspruch ausgestattet ist.

## Claims

1. Hub (1) for a cycle wheel (40), the hub comprising a hub body (5) designed to rotate about an axis XX and formed so as to receive at least two layers (100, 200) of spokes arranged on either side of a median plane Y0Z of the hub (1) perpendicular to the axis XX and intended to provide a mechanical link between the hub (1) and a rim (30) of the wheel (40), the hub body (5) comprising at least one flange (2) comprising a first and a second set of recesses (11a, 11b),
in which each recess (11a, 11b):
- is formed so as to accommodate at least one head (111a, 111b) of a spoke (110a, 110b) of one of said layers (100) and to hold said spoke (110a, 110b) in a direction tangential to said axis XX;
- defines a seat (14a, 14b) formed so as to retain the head (111a, 111b) of said spoke (110a, 110b) in a direction tangential to said axis XX;
- comprises an opening (15a, 15b) which communicates with the seat and is open in an axial direction parallel to said axis XX;
- the openings (15a) of the first set (11a) of recesses being turned towards the median plane Y0Z and the openings (15b) of the second set of recesses (11b) being turned away from the median plane Y0Z,
**characterized in that**
- the seats (14a) of the recesses (11a) of the first set of recesses are axially further from the median plane Y0Z than the seats (14b) of the recesses (11b) of the second set of recesses.

2. Hub (1) according to the preceding claim, in which each recess (11a, 11b) of the first and second sets of recesses is formed so as to allow the spoke (110, 110b) that it holds to be positioned only by passing through said opening (15a, 15b) of the recess (11a, 11b) .

3. Hub (1) according to either of the preceding claims, in which each recess (11a, 11b) of the first and second sets of recesses is formed so as to allow the spoke (110, 110b) that it holds to be positioned only by inserting the head of the spoke (111a, 111b) through the opening (15a, 15b), by means of a movement comprising at least one axial translation.

4. Hub (1) according to any one of the preceding claims, in which the seats (14a) of the recesses (11a) of the first set are arranged in a plane YZa perpendicular to the axis XX and the seats (14b) of the recesses (11b) of the second set are arranged in a plane YZb perpendicular to the axis XX, the planes YZa and YZb being separated by a distance Dp, measured along the axis XX, of less than 10 mm, preferably between 0.2 and 10 mm.

5. Hub (1) according to the preceding claim, in which Dp is between 0.2 and 5 mm, preferably between 0.9 and 3.5 mm.

6. Hub (1) according to any one of the preceding claims, in which the flange (2) has, in rotation about the axis XX, an alternating sequence of recesses belonging to the first set (11a) and to the second set (11b) of recesses.

7. Hub (1) according to any one of the preceding claims, in which the recesses (11a, 11b) are formed such that each spoke (110a) held in a recess (11a) of the first set of recesses crosses at least one spoke (110b) held in a recess (11b) of the second set of recesses.

8. Hub (1) according to any one of the preceding claims, in which two consecutive recesses (11a, 11b) belonging respectively to the first and to the second set of recesses are formed such that the spokes (110a, 110b) held by these recesses cross at a distance Dc from the axis XX, the distance between the axis XX and the seats (14a, 14b) of these recesses being Ds, wherein the distances Dc and Ds are measured along a direction radial to the axis XX and the ratio Dc/Ds is less than 2.5.

9. Hub (1) according to the preceding claim, in which the ratio Dc/Ds is preferably less than 2, less than 1.5.

10. Hub (1) according to the preceding claim, in which the ratio Dc/Ds is between 1.2 and 1.3.

11. Hub (1) according to any one of the preceding claims, in which two consecutive recesses (11a, 11b) belonging respectively to the first (11a) and to the second (11b) sets of recesses are formed such that their spokes (110a, 110b) are held along two tangential directions which together form an angle α between 50° and 160° and preferably between 70° and 130°.

12. Hub (1) according to any one of the preceding claims, in which the flange (2) has protuberances (3), each protuberance (3) bearing at least recesses (11a, 11b) belonging to the first and/or to the second sets of recesses.

13. Hub (1) according to the preceding claim, in which each protuberance (3) bears at least recesses (11a, 11b) belonging to the first (11a) and to the second (11b) sets of recesses.

14. Assembly comprising a hub (1) according to any one of the preceding claims and spokes (110a, 110b) designed to cooperate with the recesses (11a, 11b) borne by the hub (1).

15. Assembly according to the preceding claim, in which each spoke (110a, 110b) comprises, at one of its ends, a head (111a, 111b) formed so as to engage in a recess (11a, 11b) and, at the other of its ends, a thread or securing means intended to cooperate with a rim (30).

16. Assembly according to either of the two preceding claims, in which the recesses (11a, 11b) are formed such that each spoke (110a) held in a recess of the first set (11a) of recesses crosses at least one spoke (110b) held in a recess of the second set (11b) of recesses.

17. Assembly according to any one of the three preceding claims, in which two consecutive recesses (11a, 11b) belonging respectively to the first (11a) and to the second (11b) set of recesses are formed such that their spokes (110a, 110b) cross at a distance Dr from their seats (14a, 14b), the distance Dr being measured along the principal direction of extent of the spoke, Dr being less than 50 mm and preferably less than 30 mm.

18. Method for building an assembly according to any one of the four preceding claims, comprising the following steps:
- inserting a first spoke into a first recess selected from the first (11a) and the second (11b) sets of recesses, by inserting the head of this first spoke through the opening of this first recess until the head of this first spoke is positioned on the seat of this first recess and the stem of this first spoke is positioned in the mouth of this first recess, such that this first spoke extends tangentially to the axis XX;
- inserting a second spoke into a second recess selected from the other of the first (11a) and the second (11b) sets of recesses, positioning the head of this second spoke between said first spoke and the opening of the second recess, then inserting the head of this second spoke through the opening of this second recess until the head of this second spoke is positioned on the seat of this second recess and the stem of this second spoke is positioned in the mouth of this second recess, such that this second spoke extends tangentially to the axis XX and crosses the first spoke.

19. Wheel (40) for a cycle comprising an assembly according to any one of Claims 14 to 17, and a rim (30) formed to cooperate with an end of the spokes (110a, 110b).

20. Cycle equipped with at least one wheel (40) according to the preceding claim.
